# EUROPEAN PATENT APPLICATION

(11) **EP 3 031 436 A1**
(43) Date of publication of application: **15.06.2016**
(21) Application number: 15003510.3
(22) Date of filing: 09.12.2015
(51) Int. Cl.: A61H 1/02, A63B 23/10, A63B 21/00, A63B 22/16, A63B 23/035, A63B 26/00, A63B 21/068

(54) **TURNING DEVICE**

(30) Priority: 11.12.2014 US 201462090475 P
(71) Applicant: Alamarales, Rodrigo, Cincinnati, Ohio 45206 (US)
(72) Inventor: Alamarales, Rodrigo, Cincinnati, Ohio 45206 (US)
(74) Representative: Samson & Partner Patentanwälte mbB

(57) **Abstract**

A turning training device includes a base having a convex shape longitudinally along the base. The device can be positioned longitudinally relative to a user to help the user perform turns in a flat foot mode. A brake can be provided to slow the device in the flat foot mode. The device can also be positioned laterally relative to the user to help the user perform turns in a relevé mode.

## Description

### PRIORITY

This application claims priority to U.S. Provisional Patent Application Serial No. 62/090,475, entitled "Turning Device," filed on December 11, 2014, the disclosure of which is incorporated by reference herein.

### BACKGROUND

Turning boards have been used to help train dancers to perform turns and/or pirouettes. Typically, such turning boards deform when in use or create friction, which make it difficult to perform multiple revolutions on the turning board. These turning boards also lack the capability to allow a user to turn on relevé, or on the ball of the foot with the heel in a raised position. These turning boards may be hazardous by allowing a user to slip and fall because the turning board lacks a braking mechanism to allow the turning board to safely stop turning. Accordingly, described herein is an improved turning device that may be used as a training device for dancers to perform turns and/or pirouettes.

While a variety of turning devices have been made and used, it is believed that no one prior to the inventor(s) has made or used an invention as described herein.

### BRIEF DESCRIPTION OF THE DRAWINGS

While the specification concludes with claims which particularly point out and distinctly claim the invention, it is believed the present invention will be better understood from the following description of certain embodiments taken in conjunction with the accompanying drawings, in which like reference numerals identify the same elements.
FIG. 1 depicts a top perspective view of a turning device.
FIG. 2 depicts a bottom perspective view of the turning device of FIG. 1.
FIG. 3 depicts a side elevational view of the turning device of FIG. 1.
FIG. 4 depicts a top plan view of the turning device of FIG. 1.
FIG. 5 depicts a bottom plan view of the turning device of FIG. 1.
FIG. 6A depicts a side view of the turning device of FIG. 1 being used in a flat foot mode.
FIG. 6B depicts a side view of the turning device of FIG. 1 braking in the flat foot mode.
FIG. 7A depicts a top perspective view of the turning device of FIG. 1 positioned in a relevé mode.
FIG. 7B depicts a top perspective view of the turning device of FIG. 1 being used in the relevé mode.

The drawings are not intended to be limiting in any way, and it is contemplated that various embodiments of the invention may be carried out in a variety of other ways, including those not necessarily depicted in the drawings. The accompanying drawings incorporated in and forming a part of the specification illustrate several aspects of the present invention, and together with the description serve to explain the principles of the invention; it being understood, however, that this invention is not limited to the precise arrangements shown.

### DETAILED DESCRIPTION

The following description of certain embodiments of the present disclosure should not be used to limit the scope of the present disclosure. Other examples, features, aspects, embodiments, and advantages of the invention will become apparent to those skilled in the art from the following description. As will be realized, various aspects of the present disclosure may take alternate forms, or have alternate or additional embodiments, without departing from the scope of the present disclosure. Accordingly, the drawings and descriptions should be regarded as illustrative in nature and not restrictive.

A turning training device can be used to help dancers improve their ability to do multiple turns. This is achieved by providing a turning device that has a convex shape. Such a convex shape reduces friction between the turning device and the floor to allow the turning device to turn smoothly. The convex shape also creates instability while turning, which exaggerates the user's turning technique flaws to help the user detect and fix such flaws. The turning device can be used in either a flat foot mode or a relevé mode. In the flat foot mode, the foot is placed flat along the turning device to help the user get the feeling of multiple turns and practice spotting. The instability provided by the turning device in the flat foot mode challenges the user to keep his core strong, while still providing enough surface area for balancing on the entire foot to make it easier for the user to accomplish multiple turns. In the relevé mode, the metatarsus of the foot is placed on the turning device with the heel in a raised position so that the user can learn control while turning. When on relevé, there is less balancing surface area, making it more difficult to turn. The instability provided by the turning device in the relevé mode once again exaggerates the user's turning technique flaws. After mastering multiple turns on the training device, performing multiple turns on the floor without the training device is easier.

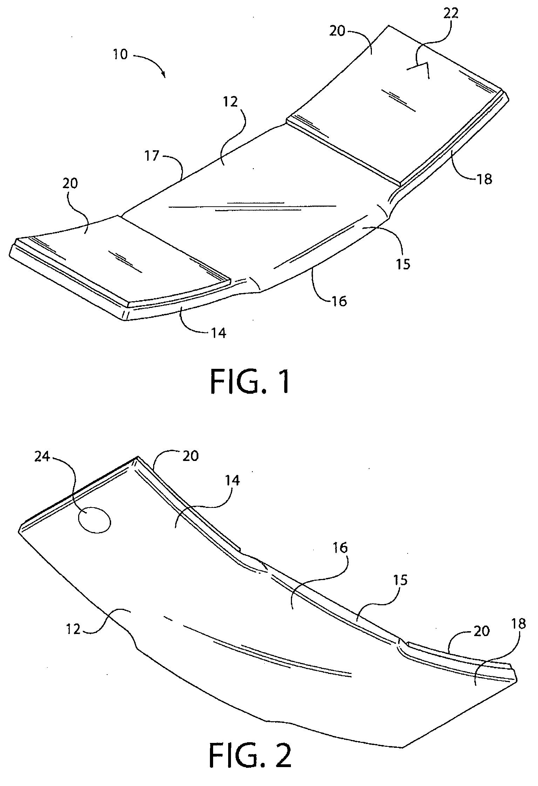

FIGS. 1-5 illustrate a turning device (10) that comprises a base (12) having a convex shape. In the illustrated embodiment, the base (12) has a convex shape both longitudinally and laterally along the bottom surface of the base (12). This provides for minimal contact between the base (12) of the turning device (10) and the floor to minimize friction between the turning device (10) and the floor. This may allow the turning device (10) to turn smoothly on a floor. The convex shape of the base (12) also creates enough instability while turning, along with the centrifugal force, to exaggerate a user's turning technique flaws to help the user detect and fix such flaws. Other suitable shapes and configurations for the base (12) will be apparent to one with ordinary skill in the art in view of the teachings herein. For instance, in some embodiments, the base (12) only has a convex shape along the longitudinal direction of the base (12). The base (12) may further be translucent and/or have various colors.

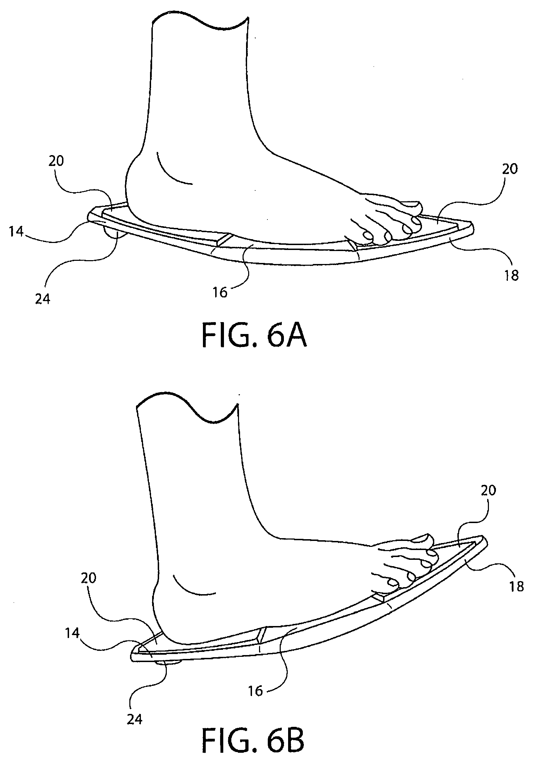

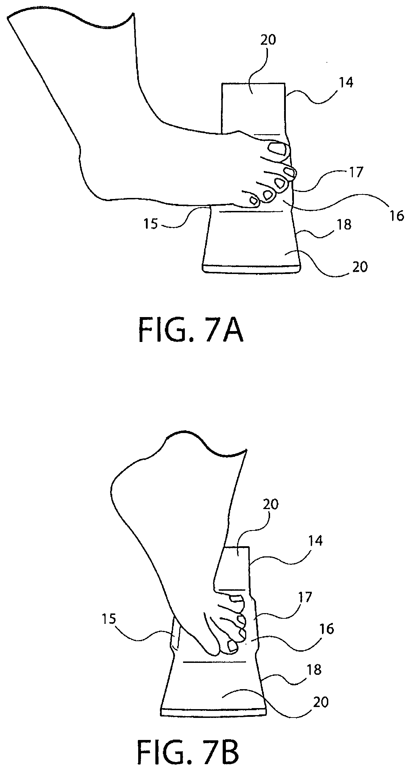

The base (12) further comprises a front portion (18), a back portion (14), and a middle portion (16) positioned between the front portion (18) and the back portion (14). The base (12) comprises a polycarbonate material, or any other suitable material, to prevent the base (12) from flexing during use. In the flat foot mode, a user places his or her foot longitudinally along the turning device (10) such that the heel is positioned on the back portion (14), the arch or middle of the foot is positioned on the middle portion (16), and the ball or toes of the foot is positioned on the front portion (18) of the base (12) (FIGS. 6A-6B). In the relevé mode, the turning device (10) is positioned laterally relative to the user such that the user places the front of his or her foot on the middle portion (16) of the turning device (10) (FIGS. 7A-7B). These modes will be discussed in more detail below.

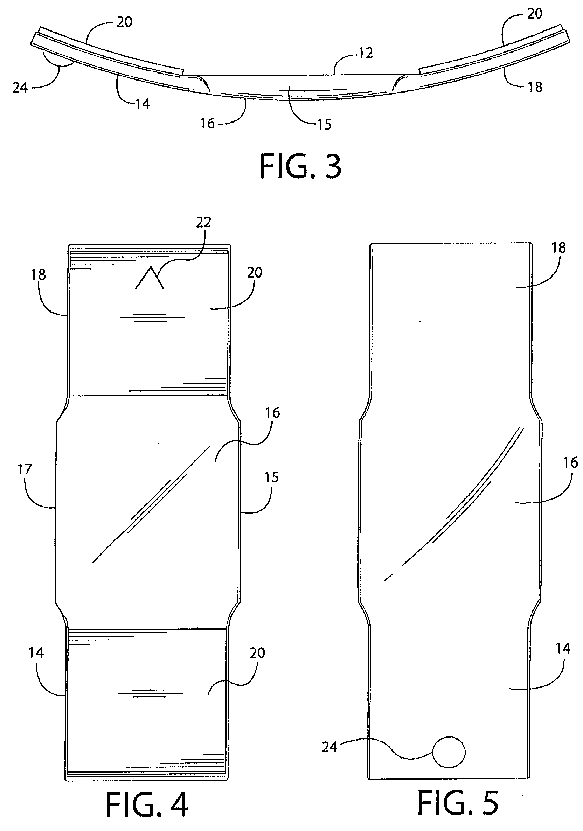

Accordingly, the middle portion (16) is sized to be sufficiently wide enough to receive the front of the foot. As best seen in FIGS. 4 and 5, the middle portion (16) is wider than the front and back portions (18, 14) in the present embodiment. In other embodiments, the middle portion (16) is the same width or narrower than the front and back portions (18, 14). The top surface of the middle portion (16) is substantially flat to mimic the surface of a floor. As best seen in FIG. 1, the middle portion (16) further comprises a curved edge (15) along a side of the middle portion (16). This curved edge (15) reduces discomfort for the user while positioning his or her foot laterally on the turning device (10) in the relevé mode. In the illustrated embodiment, the opposing side of the middle portion (16) comprises a straight edge (17). Alternatively, the opposing side of the middle portion (16) can also comprise a curved edge. Other suitable configurations for middle portion (16) will be apparent to one with ordinary skill in the art in view of the teachings herein.

As shown in FIGS. 1 and 3, each of the front and back portions (18, 14) of the base (12) comprise a pad (20) positioned on a top surface of the front and back portions (18, 14). These pads (20) provide a cushion between the user's foot and the base (12). The pads (20) may further provide more grip for the user's foot on the turning device (10). Pads (20) can be made from ethylene-vinyl acetate (EVA) foam, or any other suitable material. In the illustrated embodiment, the pads (20) are placed on the base (12) without a border to encase the pads (20) to avoid pain on the user's foot. Other suitable configurations for pads (20) will be apparent to one with ordinary skill in the art in view of the teachings herein. For instance, pads (20) can cover more or less of the base (12). In some versions, pads (20) can be placed on middle portion (16). In other versions, the pads (20) are removed. Further, an arrow (22) is provided on the pad (20) of the front portion (18) to indicate to a user which direction to longitudinally position the turning device (10) relative to the user in the flat foot mode. While an arrow (22) is used in the present embodiment to indicate the position of the turning device, any other suitable indicator and/or symbol may be used. Such an indicator is merely optional.

Turning device (10) further comprises a brake (24) provided on the bottom surface of back portion (14), as best seen in FIGS. 2 and 3. The brake (24) provides a safety feature to prevent the user from slipping and falling to the ground to avoid injury in the flat foot mode. For instance, the brake (24) engages the floor to slow and/or stop rotation of the turning device (10) when the user slips backwards to pivot the turning device (10) rearwardly onto back portion (14). Alternatively, a user may purposefully engage the brake (24) when the user desires to stop turning. Accordingly, the brake (24) is positioned off of the floor during use of the turning device (10) and is engaged by pivoting rearwardly on the turning device (10) such that the brake (24) does not interfere with the functionality of the turning device (10) during normal use. The brake (24) can be made of rubber or any other suitable material to sufficiently slow and/or stop rotation of the turning device (10). In the illustrated embodiment, the brake (24) comprises a spherical shape extending from the bottom surface of the back portion (14), but any other suitable configuration for the brake (24) will be apparent to one with ordinary skill in the art in view of the teachings herein.

FIGS. 6A-6B show the turning device (10) being used in the flat foot mode. As best seen in FIG. 6A, the turning device (10) is placed longitudinally relative to the user with the arrow (22) on pad (20) facing outward. In this position, the front portion (18) of the base (12) is placed away from the user and the back portion (14) of the base (12) is placed toward the user. The user can then position his or her foot onto the turning device (10) with the ball and/or toes of the foot on the front portion (18), the arch or middle of the foot on the middle portion (16), and the heel of the foot on the back portion (14). The pads (20) of the base (12) provide cushioning for the user's foot on front and back portions (18, 14).

While positioned in the flat foot mode, the user can spin on the turning device (10) to help the user get the feeling of performing multiple turns and practice spotting. The instability provided by the turning device (10) in the flat foot mode challenges the user to keep his core strong, while still providing enough surface area for balancing on the entire foot to make it easier for the user to accomplish multiple turns. If the user loses his or her balance while performing turns in the flat foot mode, the brake (24) provides a safety feature to prevent the user from slipping and falling to the ground to avoid injury. As shown in FIG. 6B, the brake (24) engages the floor to slow and/or stop rotation of the turning device (10) when the user slips backwards to pivot the turning device (10) rearwardly onto back portion (14). Alternatively, the user may purposefully engage the brake (24) when he or she desires to stop turning.

FIGS. 7A-7B show the turning device (10) being used in the relevé mode. In this mode, the turning device (10) is positioned laterally relative to the user with the curved edge (15) facing the user. The user can then place the front area of his or her foot on the middle portion (16), as shown in FIG. 7A. The curved edge (15) of the base (12) can provide more comfort for the user's foot while the user is positioning his or her foot in the relevé mode. In this position, the user can then raise his or her heel from the floor and perform multiple turns on relevé, as shown in FIG. 7B. When on relevé, there is less balancing surface area, making it more difficult to turn. The instability provided by the turning device (10) in the relevé mode once again exaggerates the user's turning technique flaws. After mastering multiple turns on the training device (10), performing multiple turns on the floor without the training device (10) is easier. When the user desires to stop turning, the user can lower his or her heel back to the floor.

The base (12) of turning device (10) can be made from a polycarbonate material, or any other suitable material, to prevent the base (12) from flexing during use. The base (12) can be manufactured by injection molding, machining, etc. The pads (20) can be made from foam, rubber, or any other suitable material to provide cushioning to a user's foot and/or to provide a non-slip surface for the user's foot. The pads (20) can be attached to the base (12) by adhesive, welding, etc. The brake (24) can also be made from foam, rubber, or any other suitable material to slow and/or stop rotation of the turning device (10). The brake (24) can be attached to the base (12) by adhesive, welding, etc. Still other suitable methods for manufacturing the turning device (10) will be apparent to one with ordinary skill in the art in view of the teachings herein.

Having shown and described various embodiments of the present disclosure, further adaptations of the methods and systems described herein may be accomplished by appropriate modifications by one of ordinary skill in the art without departing from the scope of the present disclosure. Several of such potential modifications have been mentioned, and others will be apparent to those skilled in the art. For instance, examples, embodiments, geometrics, materials, dimensions, ratios, steps, and the like discussed above are illustrative and are not required. Accordingly, the scope of the present disclosure should be considered in terms of the following claims and is understood not to be limited to the details of structure and operation shown and described in the specification and drawings.

## Claims

1. A turning training device comprising a base having a convex shape longitudinally along the base, wherein the device is positionable longitudinally relative to a user for use in a flat foot mode, and wherein the device is positionable laterally relative to a user for use in a relevé mode.

2. The device of claim 1, wherein the base comprises a front portion, a back portion, and a middle portion positioned between the front and back portions.

3. The device of claim 2, wherein the front and back portions of the base each comprise a pad.

4. The device of claim 3, wherein each pad is positioned on a top surface of the base such that each pad is not encased by the base.

5. The device of claim 3, wherein the pad on the front portion of the base comprises an indicator configured to indicate the direction to position the turning device relative to the user.

6. The device of claim 5, wherein the indicator is an arrow.

7. The device of claim 2, wherein the middle portion comprises a curved edge.

8. The device of claim 2, wherein the back portion comprises a brake on a bottom surface of the back portion.

9. The device of claim 1, wherein the base comprises a polycarbonate material.

10. The device of claim 1, wherein the base further has a convex shape laterally along the base.

11. The device of claim 1, wherein the base is sufficiently rigid to prevent the base from flexing during user.

12. A turning training device comprising a base having a convex shape longitudinally along the base, wherein the base comprises a middle portion configured for use in a relevé mode.

13. The device of claim 12, wherein the middle portion comprises a curved edge.

14. The device of claim 12, wherein the middle portion of the base is positioned between a front and a back portion of the base, wherein the device is configured for use in a flat foot mode.

15. The device of claim 14, wherein the back portion of the base comprises a brake.
